(19) Europäisches Patentamt
European Patent Office
Office européen des brevets

(11) **EP 3 824 324 B1**

(12) **FASCICULE DE BREVET EUROPEEN**

(45) Date de publication et mention
de la délivrance du brevet:
**26.04.2023 Bulletin 2023/17**

(21) Numéro de dépôt: **19737775.7**

(22) Date de dépôt: **15.07.2019**

(51) Classification Internationale des Brevets (IPC):
***G01V 3/10*** *(2006.01)*

(52) Classification Coopérative des Brevets (CPC):
**G01V 3/10; G01V 3/104**

(86) Numéro de dépôt international:
**PCT/EP2019/069048**

(87) Numéro de publication internationale:
**WO 2020/016197 (23.01.2020 Gazette 2020/04)**

(54) **DÉTECTEUR COMBINÉ POUR LA DÉTECTION DE MÉTAUX ET D'OBJETS CIBLES MAGNÉTISÉS**

KOMBINIERTER DETEKTOR ZUM ERKENNEN VON METALLEN UND MAGNETISIERTEN ZIELOBJEKTEN

COMBINED DETECTOR FOR DETECTING METALS AND MAGNETISED TARGET OBJECTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.07.2018 FR 1856547**

(43) Date de publication de la demande:
**26.05.2021 Bulletin 2021/21**

(73) Titulaire: **Manneschi, Alessandro
52100 Arezzo (IT)**

(72) Inventeur: **Manneschi, Alessandro
52100 Arezzo (IT)**

(74) Mandataire: **Regimbeau
20, rue de Chazelles
75847 Paris Cedex 17 (FR)**

(56) Documents cités:
**EP-A2- 1 750 149    US-A1- 2018 012 465**

- **Westminster: "WI CODE : 11443 PRODUCT DATA SHEET WG Portable Walk-By Mobile Phone and Metal Detector", , 1 juillet 2017 (2017-07-01), XP055594600, Extrait de l'Internet: URL:https://www.wi-ltd.com/wp-content/uploads/2016/05/WG-Portabale-Walk-By-Mobile-Phone-and-Metal-Detector-1.pdf [extrait le 2019-06-06]**
- **GUI YUN TIAN ET AL: "Design of an electromagnetic imaging system for weapon detection based on GMR sensor arrays", SENSORS AND ACTUATORS A: PHYSICAL, ELSEVIER BV, NL, vol. 174, 24 novembre 2011 (2011-11-24), pages 75-84, XP028443426, ISSN: 0924-4247, DOI: 10.1016/J.SNA.2011.11.034 [extrait le 2011-12-04]**
- **Anonymous: "News - Page 5 of 9 - Westminster International Ltd", , 22 novembre 2016 (2016-11-22), XP055594603, Extrait de l'Internet: URL:https://www.wi-ltd.com/news/page/5/ [extrait le 2019-06-06]**

## Description

<u>DOMAINE DE L'INVENTION</u>

L'invention concerne le domaine de la détection d'objets cibles, et plus particulièrement de la détection d'objets non autorisés dans une zone à accès protégé.

<u>ARRIERE-PLAN TECHNOLOGIQUE</u>

Récemment, il a été proposé sur le marché différents téléphones et de smartphones (téléphones intelligents en anglais) miniaturisés qui s'avèrent indétectables par les portiques de détection de métaux habituels. En effet, la quantité de métal comprise dans ces dispositifs a été réduite au minimum grâce à l'utilisation de plastique métallisés tels que des blindages radiofréquences ou encore à des solutions moulées dans du plastique conducteur.

La présence de téléphones portables dans certains environnements tels que les prisons est strictement interdite dans la mesure où ils peuvent être utilisés par les prisonniers afin de communiquer avec l'extérieur et leur permettre de poursuivre leurs activités criminelles et autres actions illégales depuis l'intérieur des prisons.

Certes, les portiques de détection de métaux sont capables de détecter de tels téléphones portables lorsque leur sensibilité est suffisamment élevée, dans la mesure où ces téléphones comprennent toujours du métal en plus ou moins grande quantité. Cependant, une telle sensibilité n'est pas adaptée à toutes les situations nécessitant une inspection. Ainsi, une sensibilité élevée est adaptée dans les cas où les portiques de détection de métaux sont placés dans des prisons de haute sécurité, dans lesquelles les prisonniers ont l'obligation de porter des tenues spécifiques dépourvues de métal. A contrario, dans des prisions dont le niveau de sécurité est moins élevé, les prisonniers et/ou leurs visiteurs sont autorisés à porter leurs propres habits qui peuvent comporter des objets métalliques tels que des tirettes, des boutons, etc. Il faut donc faire un choix entre régler la sensibilité du portique de détection de métaux sur un niveau suffisamment élevé pour lui permettre de détecter tout élément métallique, y compris les téléphones miniaturisés, ce qui implique que le portique génère une grande quantité d'alarmes inutiles dès lors que la personne inspectée porte du métal, ou régler la sensibilité sur un niveau modéré permettant au portique de détecter de gros objets métalliques, tels que des armes, sans pour autant détecter de petits objets métalliques de la vie courante (montres, ceintures, etc.) et éviter ainsi la génération d'alarmes intempestives. Toutefois, lorsque la sensibilité est modérée, les portiques de détection de métaux ne sont alors plus capables de détecter des objets de petite taille tels que des téléphones miniaturisés.

En variante, la détection des téléphones portables peut également être réalisée à l'aide de barrières individuelles portables comprenant des capteurs magnétostatiques. De telles barrières comprennent généralement un poteau fixé sur un socle et équipé d'au moins un capteur magnétostatique, par exemple trois capteurs magnétostatiques répartis sur la hauteur du poteau. Chaque capteur est configuré pour générer un signal (tension) indicatif d'une variation d'intensité d'un champ magnétique détecté. Ces barrières sont notamment utilisées au sein de prisons afin de détecter si les prisonniers portent des objets magnétisés ou ferromagnétiques, et plus particulièrement des téléphones portables. Pour cela, la sensibilité des capteurs magnétostatiques peut être très élevée, les prisonniers étant normalement privés de tout matériau métallique ou magnétique.

La pratique actuelle est de placer les portiques de détection de métaux à l'entrée de zones critiques des prisons (dont notamment l'entrée visiteur), les zones d'accueil des prisonniers, les zones de transit entre les ateliers et les cellules, etc. tandis que les barrières sont portables et sont donc placées temporairement dans d'autres zones afin d'inspecter les prisonniers sans que ceux-ci ne puissent le prévoir à l'avance. Toutefois, à l'usage, il s'avère que les prisonniers adaptent leur comportement en fonction des zones qu'ils sont amenés à traverser. En particulier, les prisonniers savent qu'ils peuvent se déplacer avec un couteau en acier inoxydable dans les couloirs sans risquer d'émettre une alarme en passant à côté d'une barrière (l'acier inoxydable n'étant pas ferromagnétique) et qu'ils peuvent obtenir un téléphone miniature lors d'une visite puisque la sensibilité des portiques de détection de métaux doit être modérée pour éviter les alarmes intempestives.

Le document EP 1 750 149 décrit un exemple de portique de détection de métaux comprenant des bobinages répartis dans les montants verticaux du portique configurés pour émettre un champ magnétique alternatif et adaptés pour générer un signal représentatif d'une perturbation du champ magnétique induite lors d'un passage d'un individu entre les deux montants verticaux. Toutefois, cet exemple de portique ne permet pas de détecter à la fois des petits objets cibles du type téléphone portable miniaturisé et des gros objets métalliques tels que des armes.

Le document "WI CODE : 11443 PRODUCT DATA SHEET WG Portable Walk-By mobile", Westminster International Ltd, décrit un détecteur comprenant un système de détection. Le fonctionnement du détecteur n'est en revanche pas détaillé.

L'article "Design of an electromagnetic imaging system for weapon détection based on GMR sensor arrays", SENSORS AND ACTUATORS A: PHYSICAL, ELSEVIER BV, NL, de GUI YUN TIAN et al, décrit un détecteur comprenant un système de détection actif de métal conventionnel et un système supplémentaire comprenant des capteurs GMR (acronyme anglais de Giant Magneto-Resistive, pour magnétorésistifs géants). Les capteurs GMR mesurent la distorsion du champ magnétique alternatif généré par le passage d'un objet métallique dans le détecteur pour obtenir une image de l'objet.

Ici encore, le détecteur de ce document ne permet pas de détecter à la fois des petits et les gros objets cibles.

RESUME DE L'INVENTION

Un objectif de l'invention est donc de proposer de nouveaux moyens de détection capables d'améliorer la détection d'objets cibles susceptibles d'être portés par un individu, qu'il s'agisse de petits objets cibles tels que des téléphones portables miniaturisés ou de gros objets métalliques tels que des armes, quel que soit l'environnement dans lequel est faite la détection.

Pour cela, l'invention propose un détecteur combiné conforme à la revendication 1.

Certaines caractéristiques préférées mais non limitatives du détecteur combiné décrit ci-dessus sont les suivantes, prises individuellement ou en combinaison :

- chaque capteur magnétostatique est entouré par un blindage conducteur.
- le blindage conducteur comprend un manchon cylindrique réalisé dans un matériau métallique amagnétique tel que de l'aluminium, du cuivre et/ou du laiton.
- chaque capteur magnétostatique présente une hauteur déterminée, et une hauteur du blindage conducteur est supérieure à la hauteur déterminée du capteur magnétostatique associé, de préférence une hauteur au moins égale à 1,5 fois la hauteur déterminée du capteur magnétostatique associé.
- l'au moins un capteur magnétostatique est centré en hauteur par rapport au blindage conducteur associé.
- le système de détection passif comprend : au moins deux capteurs magnétostatiques répartis sur une hauteur du système de détection passif, chaque capteur magnétostatique étant entouré par un blindage conducteur, et un manchon de séparation réalisé dans un matériau électriquement isolant, ledit manchon de séparation étant placé entre les deux blindages conducteurs de sorte à séparer lesdits blindages conducteurs.
- le blindage conducteur est connecté à un potentiel fixe, par exemple à la terre.
- le détecteur combiné comprend au moins deux capteurs magnétostatiques par système de détection passif, les au moins deux capteurs magnétostatiques de chaque système de détection passif étant connectés au potentiel fixe suivant une configuration en étoile.

  - le détecteur combiné comprend en outre une unité centrale de contrôle et de traitement, ladite unité centrale étant connectée d'une part aux bobinages et d'autre part à l'au moins un capteur magnétostatique et étant configurée pour recevoir et traiter à la fois le signal représentatif d'une perturbation du champ magnétique alternatif et le signal indicatif d'une intensité d'un champ magnétique statique.
  - l'unité centrale est en outre configurée pour corréler dans le temps et/ou dans l'espace le signal représentatif d'une perturbation du champ magnétique alternatif et le signal indicatif d'une intensité d'un champ magnétique statique.
  - le détecteur combiné comprend en outre un émetteur, l'unité centrale étant configurée pour envoyer des instructions de génération d'une alarme à l'émetteur lorsque le signal représentatif d'une perturbation du champ magnétique alternatif est supérieur à une première valeur seuil prédéterminée et/ou lorsque le signal indicatif d'une intensité d'un champ magnétique statique est supérieur à une deuxième valeur seuil prédéterminée.
  - le détecteur combiné comprend au moins deux systèmes de détection passifs comprenant chacun au moins un capteur magnétostatique, les capteurs magnétostatiques de chaque système de détection passifs étant positionnés deux à deux à une même hauteur par rapport au sol de sorte à former des couples de capteurs en regard, chaque système de détection passif étant logé dans un montant vertical associé et étant connecté à l'unité centrale, ladite unité centrale étant configurée pour calculer une valeur à partir des signaux générés par les capteurs magnétostatiques des deux systèmes de détection passifs, ladite valeur calculée comprenant l'une des valeurs suivantes : une valeur moyenne pour chaque couple de capteurs magnétostatiques des signaux générés par les capteurs magnétostatiques ; une moyenne, une somme ou une valeur maximale des valeurs corrigées des signaux générés par les capteurs magnétostatiques par application à chaque couple de capteur d'un coefficient d'atténuation auxdits signaux ; une somme des valeurs des signaux générés par chaque couple de capteurs magnétostatiques ; une valeur maximale parmi les valeurs des signaux générés par chaque couple de capteurs magnétostatiques.

BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :

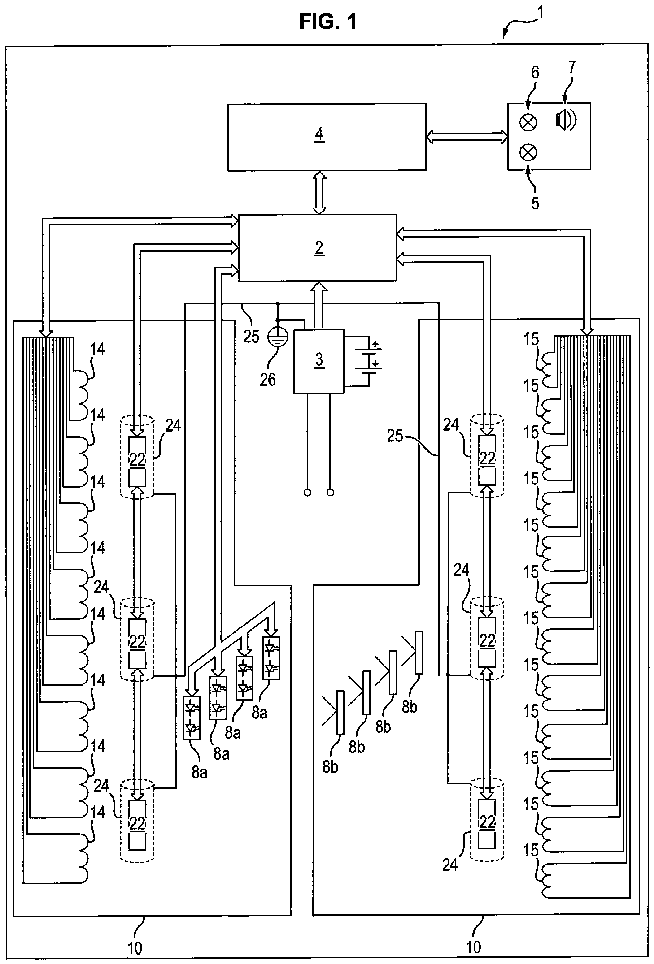

La figure 1 est une illustration synoptique d'un détecteur combiné conforme à un mode de réalisation de l'invention.

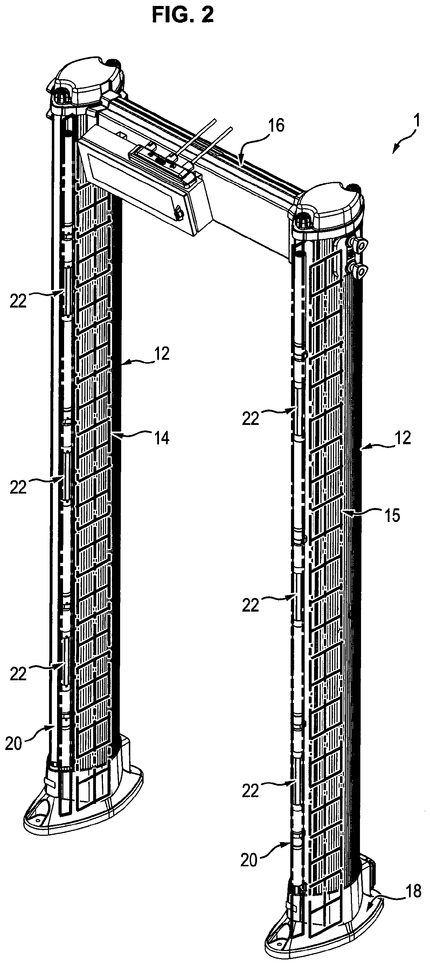

La figure 2 est une vue en perspective d'un exemple de détecteur combiné à colonnes conforme à un mode de réalisation de l'invention, sur lequel sont visibles en transparence, et représentés de manière schématique, des bobinages émetteurs et récepteurs d'un système de détection actif à champ magnétique alternatif et deux systèmes de détection passifs logés dans un panneau respectif du détecteur combiné.

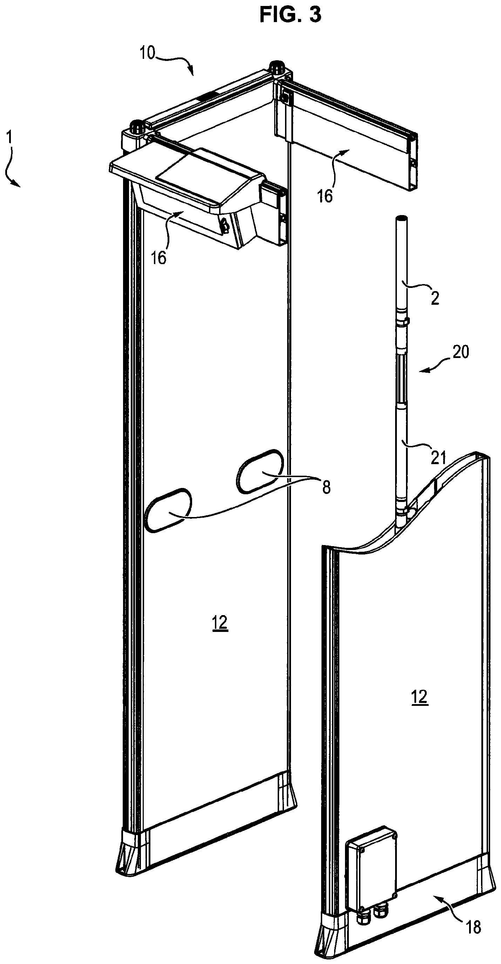

La figure 3 est une vue en perspective d'un exemple de détecteur combiné à panneaux conforme à un mode de réalisation de l'invention, une partie supérieure d'une des colonnes ayant été omis afin de montrer partiellement la portion supérieure du système de détection passif.

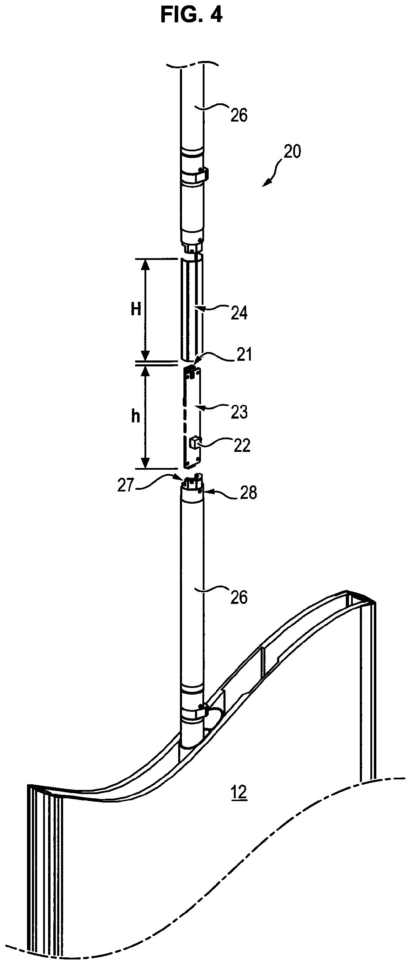

La figure 4 est une vue en détail et éclatée de la portion supérieure du système de détection passif de la figure 3.

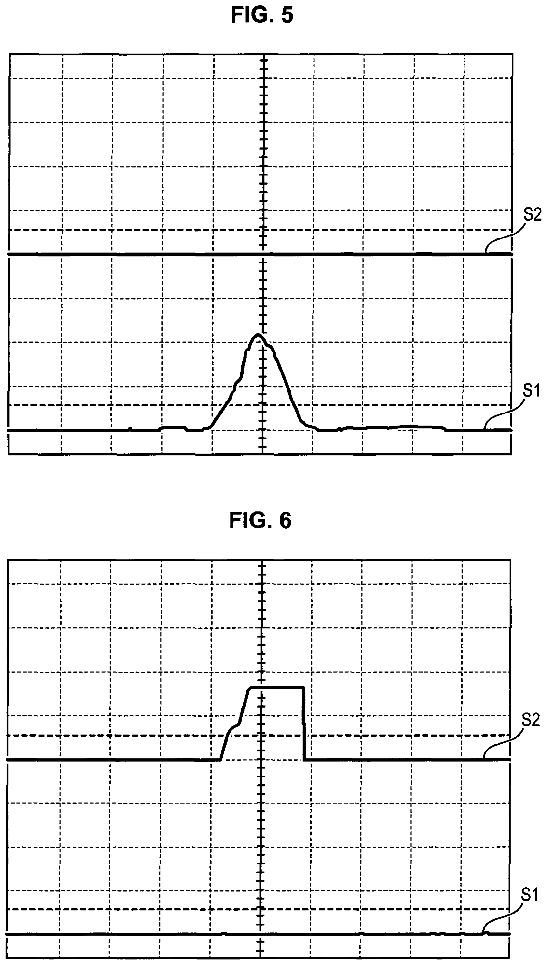

La figure 5 représente, en fonction du temps, d'une part le signal représentatif de la perturbation du champ magnétique alternatif généré par les bobines d'un exemple de réalisation d'un système de détection actif de métal, et d'autre part le signal indicatif d'un champ magnétique statique détecté par un exemple de réalisation d'un système de détection passif, lors du passage d'un téléphone miniaturisé mesurant environ 2.5 cm x 7 cm.

La figure 6 représente, en fonction du temps, d'une part le signal représentatif de la perturbation du champ magnétique alternatif généré par les bobines l'exemple de réalisation d'un système de détection actif de métal de la figure 5, et d'autre part le signal indicatif d'un champ magnétique statique détecté par l'exemple de réalisation d'un système de détection passif de la figure 5, lors du passage d'un élément coudé en métal amagnétique (aluminium ici) simulant une arme de poing (NIJ LO-A96061).

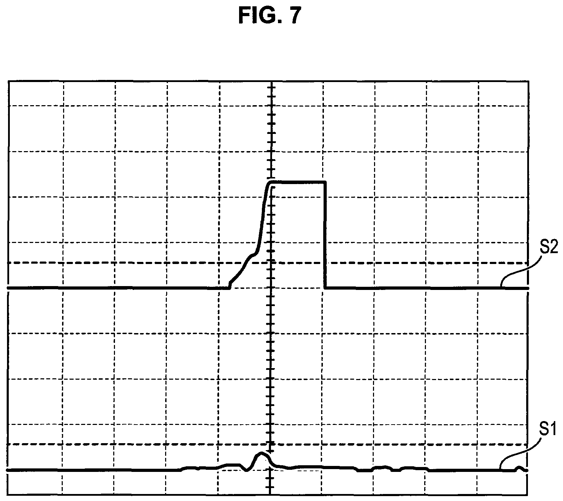

La figure 7 représente, en fonction du temps, d'une part le signal représentatif de la perturbation du champ magnétique alternatif généré par les bobines l'exemple de réalisation d'un système de détection actif de métal de la figure 5, et d'autre part le signal indicatif d'un champ magnétique statique détecté par l'exemple de réalisation d'un système de détection passif de la figure 5, lors du passage d'une téléphone conventionnel (ici un Samsung Galaxy Note 5).

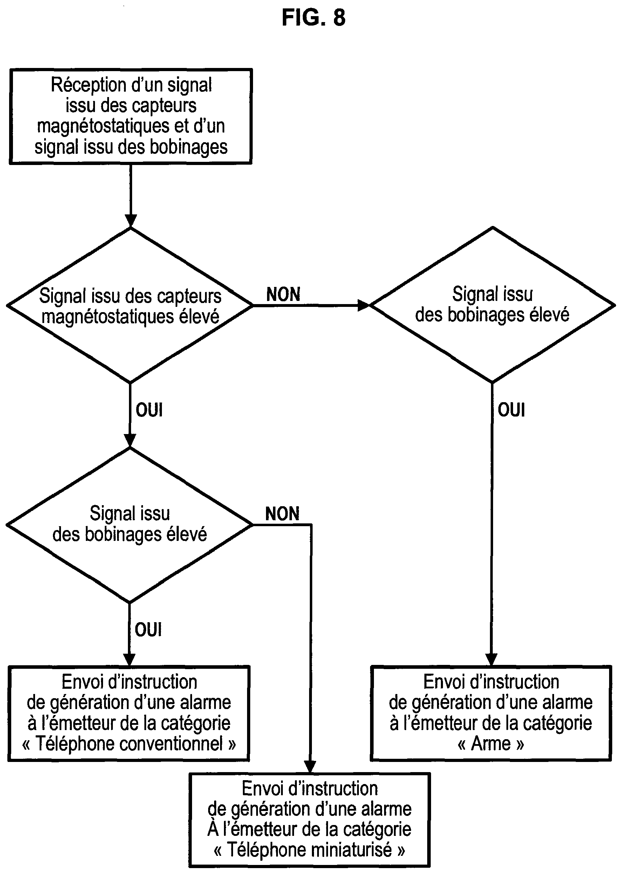

La figure 8 est un organigramme illustrant un exemple d'étapes de déduction par l'unité centrale d'un détecteur combiné de la catégorie d'un objet détecté en fonction du moment magnétique des signaux reçus.

## DESCRIPTION DETAILLEE D'UN MODE DE REALISATION

Un détecteur combiné 1 conforme à l'invention comprend :

- un système de détection actif 10 de métal, ou portique 10, comprenant au moins deux montants verticaux 12 et des bobinages 14, 15 répartis dans les deux montants verticaux 12, et

- au moins un système de détection passif 20, ou barrière 20, logé dans l'un des montants verticaux 12 et comprenant au moins un capteur magnétostatique 22.

Le Demandeur s'est en effet aperçu du fait que les téléphones présentant une faible quantité de métal (tels que les téléphones miniaturisés), et donc difficiles à détecter par les systèmes de détection actifs pour les détecter, présentaient une intensité (moment) magnétique importante, alors que les téléphones comprenant une grande quantité de métal (tels que les smartphones actuels vendus par les grandes marques de téléphonie mobile) présentaient un faible moment magnétique. L'utilisation d'un tel détecteur combiné 1 permet donc de détecter à la fois les téléphones miniaturisés (grâce au système de détection passif 20) et les smartphones actuels (grâce au système de détection actif 10) de manière simple et peu encombrante.

Plus précisément, le portique 10 comprend, de façon connue en soi, une structure en U comprenant deux montants verticaux 12 reliés au niveau de leur partie supérieure par une traverse horizontale 16. Le cas échéant, la traverse horizontale 16 peut être équipée de tout dispositif de visualisation et/ou tout élément de commande classique en soi.

Les montants verticaux 12 délimitent ainsi un passage ou canal de transit au milieu duquel doit passer une personne à inspecter.

Dans une variante de réalisation non illustrée sur les figures, le portique 10 ne comporte pas de traverse horizontale 16 de sorte que les montants verticaux 12 sont séparés l'un de l'autre.

Chaque montant vertical 12 loge un ou plusieurs bobinages 14, 15 reliés à une unité centrale 2 de contrôle et de traitement, qui peut être logée dans la traverse horizontale 16, dans l'un des montants verticaux 12 ou être placée à distance desdits montants verticaux 12. Les bobinages 14, 15 forment pour certains des émetteurs de champ magnétique alternatif et pour les autres des récepteurs. Les mêmes bobinages 14, 15 peuvent d'ailleurs former alternativement un bobinage émetteur 14 et un bobinage récepteur 15.

De nombreuses variantes de réalisation de tels bobinages 14, 15 et d'unité centrale 2 associée sont bien connues de l'homme de l'art et ne seront pas décrites dans le détail par la suite.

Sur la figure 1, on a schématisé par exemple un ensemble de bobinages émetteurs 14 (ici, huit bobinages émetteurs 14) et un ensemble de bobinages récepteurs 15 (ici, douze bobinages récepteurs 15) formant plusieurs canaux.

L'unité centrale 2 a pour fonction d'analyser le signal prélevé sur chaque bobinage récepteur 15 pour déceler la présence de métaux influençant le champ magnétique alternatif et/ou électrique généré par les bobinages émetteurs 14 et donc le couplage entre bobinage(s) émetteur(s) 14 et bobinage(s) récepteur(s) 15. Le cas échéant, selon la configuration des bobinages 14, 15 et la nature du traitement opéré par l'unité centrale 2, ladite unité centrale 2 peut en outre être configurée pour déterminer la géométrie des objets détectés, leur densité, leur masse, etc. La configuration des bobinages 14, 15 et la nature des signaux ainsi que le traitement opéré par l'unité centrale 2 permettent donc d'opérer une analyse fine des objets portés par les individus à contrôler qui transitent par le portique 10.

Dans une première forme de réalisation illustrée sur la figure 3, les montants verticaux 12 comprennent des panneaux et présentent à cet effet une forme générale en plaque, c'est à dire une faible épaisseur transversalement à la direction de passage et une largeur significative parallèlement à cette direction. En variante, dans une deuxième forme de réalisation illustrée sur la figure 2, les montants verticaux 12 comprennent des colonnes et présentent à cet effet une forme sensiblement circulaire de révolution ou elliptique.

Les montants verticaux 12 ont une hauteur suffisante pour permettre le passage des personnes à inspecter. Pour cela, chaque montant vertical 12 présente une hauteur au moins égale à 2,10 m.

Chaque barrière 20 comprend quant à elle un ou plusieurs capteurs magnétostatiques 22.

Plus précisément, chaque barrière 20 comprend au moins un capteur magnétostatique 22, de préférence au moins deux, par exemple trois capteurs magnétostatiques 22 répartis sur une hauteur du montant vertical 12 dans lequel elle est logée. Par hauteur, on comprendra ici la dimension suivant une direction normale au sol entre un socle 18 du portique 10 et la traverse horizontale 16.

Par exemple, la barrière 20 peut comprendre un premier capteur magnétostatique 22 à proximité du sol afin de détecter des objets cibles portés au niveau des pieds d'une personne inspectée, un deuxième capteur magnétostatique 22 à mi-hauteur (par exemple entre environ 1,00 m et 1,20 m du sol) afin de détecter des objets cibles portés au niveau des hanches et un troisième capteur magnétostatique 22 à hauteur des épaules (par exemple à environ 1,70 m du sol).

Les capteurs 22 de la barrière 20 peuvent être fixés soit sur un poteau 21 qui est rapporté et fixé dans le montant vertical 12 associé du portique 10, soit directement sur une structure monobloc appartenant au portique 10, qui peut par exemple être obtenue par moulage avec le montant vertical 12 associé.

La structure (poteau 21 ou structure monobloc) portant les capteurs de la barrière 20 présente une hauteur inférieure ou égale à la hauteur des montants verticaux 12 afin d'être masquée dans lesdits montants 12. Par exemple, la hauteur de la structure peut être comprise entre 1,70 m et 2,00 m.

Chaque capteur magnétostatique 22 est configuré pour détecter un champ magnétique statique généré par un élément magnétisé ou résultant d'une variation du champ magnétique terrestre lors du passage d'un élément ferromagnétique dans le canal de transit. Pour cela, chaque capteur magnétostatique 22 comprend un élément sensible aux champs magnétiques (tel qu'une cellule de Hall, une magnétorésistance ou une boussole à vanne de flux (fluxgate en anglais), etc.) fixé sur une carte électronique 23 de sorte à générer un signal indicatif d'une intensité du champ magnétique statique détecté. Dans une forme de réalisation, le signal généré par le capteur magnétostatique 22 est une tension dont la valeur est proportionnelle à l'intensité du champ magnétique statique détecté.

Afin d'améliorer l'efficacité de détection de la barrière 20, tout ou partie des capteurs magnétostatiques 22 sont configurés pour détecter une intensité d'un champ magnétique statique suivant trois axes orthogonaux.

Les capteurs magnétostatiques 22 de la barrière 20 sont connectés soit en chaîne (« daisy chain » en anglais) soit directement sur des lignes séparées à l'unité centrale 2 de contrôle et de traitement. L'unité centrale 2 est donc configurée pour recevoir à la fois les signaux indicatifs d'une perturbation du champ magnétique alternatif en provenance des bobinages 14, 15 du portique 10 et les signaux indicatifs d'un champ magnétique statique détecté par les capteurs magnétostatiques 22 de la barrière 20.

La mutualisation de l'unité centrale 2 pour le portique 10 et la barrière 20 permet ainsi de réduire l'encombrement du détecteur combiné 1.

L'unité centrale 2 peut par exemple être logée dans la traverse horizontale 16.

En variante, comme indiqué plus haut, l'unité centrale 2 peut être distante et connectée via une interface de communication aux capteurs magnétostatiques 22 de la barrière 20 et aux bobinages 14, 15 du portique 10. L'interface de communication comprend de préférence une interface filaire, le détecteur combiné 1 étant généralement fixé à demeure. Alternativement, l'interface de communication peut comprendre une interface sans fil dans le cas où le détecteur combiné 1 doit être déplaçable afin de faciliter son installation, par exemple une interface du type Wi-Fi, Bluetooth, par communication optique, radio, infrarouge ou encore inductive, etc.

De préférence, afin d'améliorer la détection des objets ferromagnétiques et/ou comprenant des éléments magnétisés, le détecteur combiné 1 comprend au moins deux barrières 20, chaque barrière 20 étant logée dans un montant vertical 12 associé du portique 10.

Dans ce cas, les capteurs magnétostatiques 22 de chaque barrière 20 sont positionnés deux à deux à une même hauteur par rapport au sol de sorte à former des couples de capteurs en regard.

Comme nous le verrons par la suite, l'unité centrale 2 est alors configurée pour calculer une valeur à partir des signaux générés par les capteurs magnétostatiques 22 des deux systèmes de détection passifs. Cette valeur calculée peut alors comprendre l'une des valeurs suivantes : une valeur moyenne pour chaque couple de capteurs des signaux générés par les capteurs ; une moyenne, une somme ou une valeur maximale des valeurs corrigées des signaux générés par les capteurs par application à chaque couple de capteur d'un coefficient d'atténuation auxdits signaux ; une somme des valeurs des signaux générés par chaque couple de capteurs ; une valeur maximale parmi les valeurs des signaux générés par chaque couple de capteurs.

La combinaison, au sein d'un même détecteur, de bobinages 14, 15 et de capteurs magnétostatiques 22 crée des signaux parasites importants et de gros problèmes de couplage en raison à la fois de :

- la génération d'un champ magnétique alternatif par les bobinages émetteurs 14 du portique 10 qui perturbe les capteurs magnétostatiques 22 de la ou des barrières 20 et
- la tension générée par les capteurs magnétostatiques 22 de la ou des barrières 20 qui perturbe les bobinages récepteurs 15 du portique 10.

Par conséquent, afin de permettre une détection fiable et d'éviter les perturbations dues aux signaux parasites et au couplage capacitif, chaque capteur magnétostatique 22 du détecteur combiné 1 est entouré au moins partiellement par un blindage 24 conducteur. Par exemple, le blindage 24 peut être réalisé dans un matériau métallique amagnétique (c'est-à-dire un matériau métallique qui n'acquiert pas de propriétés magnétiques transitoires ou permanentes lorsqu'il est placé dans un champ magnétique ou soumis à un processus d'aimantation), typiquement l'un des matériaux de la liste suivante : de l'aluminium, du cuivre et/ou du laiton.

De la sorte, le blindage 24 court-circuite le champ magnétique alternatif généré par les bobinages émetteurs 14 en induisant des courants au niveau de sa surface extérieure qui empêchent la pénétration dudit champ magnétique et évite toute perturbation des capteurs magnétostatiques 22.

Dans une forme de réalisation, chaque blindage 24 est en outre connecté à une source de potentiel fixe, par exemple à la terre, afin de former un barrage capacitif et d'éviter les couplages capacitifs entre le capteur magnétostatique 22 qu'il entoure et les bobinages récepteurs 15. Pour cela, un fil conducteur 25 peut par exemple être connecté sur une tige métallique ou une vis fixée sur le blindage 24 et à la source de potentiel fixe, typiquement le sol.

Dans le cas où le détecteur combiné 1 comprend plusieurs capteurs magnétostatiques 22, et donc plusieurs blindages 24, chaque blindage 24 est raccordé au potentiel fixe (par exemple la terre), par exemple suivant une configuration en étoile (voir figure 1) ou séparément suivant des lignes distinctes.

De préférence, la forme et les dimensions du blindage 24 conducteur sont choisies de sorte qu'un maximum de la surface du capteur magnétostatique 22 qu'il entoure soit recouverte par le blindage 24 afin de minimiser les risques de couplage et de signaux parasites. Par exemple, seules les extrémités supérieure (côté traverse horizontale 16) et inférieure (côté sol) peuvent rester ouvertes.

Par exemple, le blindage 24 conducteur peut comprendre un manchon creux présentant une forme sensiblement cylindrique à l'intérieur duquel est logé le capteur magnétostatique 22. La dimension et la forme du manchon 24 sont choisies de sorte que le manchon 24 soit ajusté autour du capteur magnétostatique 22 et augmenter ainsi son efficacité. Par exemple, le manchon 24 peut être de forme cylindrique, typiquement de forme de révolution, de section carrée, de section polygonale, etc. Le cas échéant, une fenêtre borgne peut être formée dans la face interne du manchon 24, en face du capteur, afin d'éviter tout contact entre le capteur magnétostatique 22 et le manchon 24. Optionnellement, une couche isolante peut en outre être appliquée au niveau de la fenêtre, entre le capteur magnétostatique 22 et le fond de la fenêtre.

Dans une forme de réalisation, la hauteur H de chaque manchon 24 est au moins égale à la hauteur h du capteur magnétostatique 22 qu'il entoure afin d'en recouvrir toute sa surface. Le cas échéant, le capteur magnétostatique 22 peut être centré (en hauteur) par rapport au manchon 24. A titre d'exemple, la hauteur H de chaque manchon 24 peut être supérieure ou égale à 1,5 fois la hauteur h du capteur magnétostatique 22 qu'il recouvre afin de réduire les risques de couplage. Dans cet exemple de réalisation le manchon 24 peut alors rester ouvert au niveau de ses extrémités supérieure et inférieure.

Lorsque la barrière 20 comprend plusieurs capteurs magnétostatiques 22 répartis sur sa hauteur, des manchons de séparation 26, réalisés dans un matériau isolant tel qu'un plastique non conducteur, peuvent être placés entre les blindages 24 de sorte à les séparer. De manière analogue aux manchons formant le blindage 24, les manchons de séparation 26 peuvent présenter une forme cylindrique.

Les manchons de séparation 26 peuvent faire partie intégrante de la structure portant les capteurs, qu'il s'agisse d'un poteau 21 ou d'une structure monobloc avec le portique 10.

Par exemple, dans le cas d'une barrière 20 comprenant un poteau 21 et au moins deux capteurs magnétostatiques 22, chaque capteur magnétostatique 22 peut être fixé au niveau de ses bords supérieur et inférieur sur des manchons de séparation 26. A cet effet, une fente 27 peut être formée dans une extrémité des manchons de séparation 26 afin de recevoir l'un des bords de la carte électronique 23 du capteur magnétostatique 22 (voir par exemple figure 4) et maintenir celle-ci en position fixe dans le poteau 21. Le blindage 24 est ensuite rapporté et fixé sur ces manchons de séparation 26 de sorte à envelopper le capteur magnétostatique 22 et à le recouvrir sur toute sa hauteur. De préférence, le blindage 24 chevauche les manchons de séparation 26 puisque sa hauteur H et plus grande que celle du capteur magnétostatique 22. Typiquement, le blindage 24 peut chevaucher chaque manchon de séparation 26 sur une distance égale à environ 25% de sa hauteur.

Le cas échéant, chaque manchon de séparation 26 peut être localement aminci de sorte à former un épaulement 28 configuré pour recevoir avec ajustement le blindage 24.

Typiquement, dans l'exemple de réalisation illustré sur la figure 4, la barrière 20 comprend un capteur magnétostatique 22 en partie supérieure entouré d'un blindage 24 comprenant un manchon de section polygonale formé de plusieurs plaques métalliques assemblées longitudinalement. Le blindage 24 est fixé en partie supérieure et en partie inférieure sur un manchon de séparation 26. Chaque manchon de séparation 26 comprend, au niveau d'une extrémité, une fente 27 de fixation de la carte électronique 23 du capteur magnétostatique 22. La section de cette extrémité est par ailleurs polygonale de sorte à venir en contact serré avec la face interne du manchon.

En variante, les manchons de séparation 26 peuvent être rapportés et fixés sur la structure portant les capteurs magnétostatiques 22.

Le détecteur combiné 1 comprend également, de manière connue en soi, un module d'alimentation 3 et une interface homme machine 4 (HMI, acronyme anglais de Human Machine Interface), qui sont tous deux connectés à l'unité centrale 2 de contrôle et de traitement, ainsi qu'un ou plusieurs émetteurs 5, 6, 7 connectés à l'interface homme machine HMI ou à l'unité centrale 2.

Chaque émetteur 5, 6, 7 est configuré pour générer un signal d'alarme, par exemple un signal acoustique et/ou un signal optique (DEL, lampe clignotante, etc.). L'émetteur 5, 6, 7 peut être compris dans le détecteur combiné 1 ou en variante être porté par un opérateur (oreillette, etc.), auquel cas l'unité centrale 2 envoie les instructions de génération d'une alarme à l'émetteur 5, 6, 7 distant par l'intermédiaire d'une interface de communication sans fil (telle que l'interface de communication décrite ci-avant).

Le cas échéant, le détecteur combiné 1 peut comprendre au moins un émetteur 7 associé au portique 10 et au moins un émetteur 5, 6 associé à la barrière 20 afin de permettre à un opérateur de déterminer aisément l'origine de l'alarme.

Optionnellement, le détecteur combiné 1 peut en outre comprendre une ou plusieurs paires de cellules photoélectriques 8a et autant de réflecteurs 8b fixés deux à deux sur les montants verticaux 12 du portique 10 de sorte à s'étendre les uns en face des autres, entre son entrée et sa sortie, afin de détecter l'entrée et de suivre le passage d'une personne à inspecter dans le canal de transit. Il est ainsi possible de déterminer si la détection de la personne à inspecter a bien eu lieu alors que celle-ci était au sein du portique 10, entre les deux montants verticaux 12, et le cas échéant si celle-ci se trouvait au niveau de l'entrée de celui-ci, en partie centrale ou au niveau de sa sortie.

Pour cela, les cellules photoélectriques 8a sont connectées à l'unité centrale 2 et, lors d'une détection, lui envoient des informations de position de la personne à inspecter. Le cas échéant, l'unité centrale 2 peut corréler dans le temps et/ou dans l'espace ces informations de position de la personne inspectée avec les signaux générés par les capteurs magnétostatiques 22 et par les bobinages 14, 15.

Un exemple de fonctionnement d'un détecteur combiné 1 peut alors comprendre les étapes suivantes.

Au cours d'une première étape, un opérateur ajuste la sensibilité du détecteur combiné 1 à un niveau adapté en fonction de la zone dans laquelle se trouve ledit détecteur combiné 1, grâce à l'interface homme machine HMI.

De préférence, l'opérateur n'entre qu'un seul niveau de sensibilité pour les deux systèmes de détection (actif et passif). Ce niveau de sensibilité est ensuite appliqué au portique 10 et à la barrière 20, suivant une répartition prédéfinie.

En variante, l'opérateur peut ajuster le niveau de sensibilité du portique 10 et de la barrière 20 séparément.

Au cours d'une deuxième étape, une personne à inspecter passe à travers le canal de transit délimité par les montants verticaux 12 du portique 10.

Si la personne à inspecter porte un élément métallique, tel qu'une arme ou un smartphone de grande taille, son passage dans le canal de transit a pour effet de perturber le champ magnétique alternatif généré par les bobinages émetteurs 14. Les bobinages récepteurs 15 envoient donc un signal représentatif de cette perturbation du champ magnétique induite par le passage de la personne à l'unité centrale 2.

Si la valeur de ce signal est inférieure à une première valeur prédéterminée (qui dépend du niveau de sensibilité entré par l'opérateur), l'unité centrale 2 n'envoie pas d'instructions de génération d'une alarme à aux émetteurs 5, 6, 7.

Au contraire, si la valeur de ce signal est supérieure ou égale à la valeur prédéterminée, l'unité centrale 2 envoie des instructions de génération d'une alarme à l'un au moins des émetteurs 5, 6, 7.

Dans une forme de réalisation, l'émetteur 7 recevant les instructions de génération de l'alarme est un émetteur 7 associé au portique 10 pour permettre à l'opérateur déterminer que c'est la barrière 20 qui a détecté l'objet cible et en déduire le type d'objet cible à chercher.

Si la personne à inspecter porte un élément magnétisé, tel qu'un téléphone miniaturisé, le ou les capteurs magnétostatiques 22 détectent le champ magnétique statique généré par cet élément magnétisé. Les capteurs magnétostatiques 22 envoient donc un signal indicatif dudit champ magnétique à l'unité centrale 2.

Le cas échéant, l'unité centrale 2 calcule une valeur à partir des signaux générés par les capteurs magnétostatiques 22 des deux systèmes de détection passifs.

Si la valeur calculée est inférieure à une deuxième valeur prédéterminée (qui dépend du niveau de sensibilité entré par l'opérateur), l'unité centrale 2 n'envoie pas d'instructions de génération d'une alarme aux émetteurs.

Au contraire, si la valeur calculée est supérieure ou égale à la deuxième valeur prédéterminée, l'unité centrale 2 envoie des instructions de génération d'une alarme à l'un au moins des émetteurs 5, 6, 7.

Dans une forme de réalisation, le ou les émetteurs 5, 6 recevant les instructions de génération de l'alarme sont des émetteurs 5, 6 associés à la barrière 20 pour permettre à l'opérateur de déterminer que c'est la barrière 20 qui a détecté l'objet cible et en déduire le type d'objet cible à chercher.

Si la personne à inspecter porte à la fois un élément métallique et un élément magnétisé, son passage a à la fois pour effet de perturber le champ magnétique alternatif généré par les bobinages émetteurs 14 et de générer un signal indicatif d'une intensité élevée de champ magnétique par les capteurs magnétostatiques 22. Les bobinages récepteurs 15 envoient donc un signal représentatif de la perturbation du champ magnétique alternatif induite par le passage de la personne à l'unité centrale 2 tandis que les capteurs magnétostatiques 22 lui envoient le signal indicatif de l'intensité du champ magnétique statique généré par l'élément magnétisé à l'unité centrale 2.

Si la valeur du signal des bobinages 14, 15 est inférieure à la première valeur prédéterminée et que la valeur du signal généré par les capteurs magnétostatiques 22 (ou sa valeur calculée) est inférieure à la deuxième valeur prédéterminée, l'unité centrale 2 n'envoie pas d'instructions de génération d'une alarme ou aux émetteurs 5, 6, 7.

En revanche, si le signal des bobinages 14, 15 est supérieur ou égal à la première valeur prédéterminée et/ou si la valeur du signal généré par les capteurs magnétostatiques 22 (ou sa valeur calculée) est supérieure ou égale à la deuxième valeur prédéterminée, l'unité centrale 2 envoie des instructions de génération d'une alarme aux émetteurs 5, 6 ou 7 correspondants.

Dans une forme de réalisation, afin d'améliorer la détection d'objets cibles par le système de détection passif 20, et notamment sa capacité à discriminer des petits objets cibles d'objets ferromagnétiques de grande taille, ledit système comprend deux barrières 20 comportant chacune au moins deux capteurs en regard, chaque barrière 20 étant dans un montant vertical 12 respectif. De plus, l'unité centrale 2 calcule une valeur à partir des signaux générés par chaque couple de capteurs. C'est alors cette valeur calculée qui est ensuite comparée par l'unité centrale 2 au deuxième seuil de détection.

On pourra notamment se référer à l'une quelconque des demandes de brevet français n° 18 55900, n°18 55903 et 1855907, déposées le 28 juin 2018 au nom du Demandeur, pour des exemples de calcul de la valeur à partir des signaux générés par les couples de capteur.

En particulier, dans un premier mode de réalisation, l'unité centrale 2 calcule une valeur moyenne des signaux générés par chaque couple de capteurs magnétostatiques 22. Bien entendu, lorsque les barrières 20 ne comprennent chacune qu'un seul capteur magnétostatique 22, l'unité centrale 2 ne calcule qu'une seule valeur moyenne correspondant à la valeur moyenne des signaux de ces deux capteurs magnétostatiques 22. La valeur moyenne peut être une valeur moyenne arithmétique des signaux, qui correspond à la somme des valeurs des signaux divisée par le nombre de signaux ou, en variante, une valeur moyenne géométrique des signaux, qui correspond à la racine carrée du produit des signaux.

Dans un deuxième mode de réalisation, au lieu de calculer une valeur moyenne des signaux de chaque couple de capteurs magnétostatiques 22, l'unité centrale 2 peut corriger les signaux générés par chacun des couples de capteurs magnétostatiques 22 par application d'un coefficient d'atténuation à leurs signaux. Cette étape de correction permet ainsi d'atténuer les signaux générés par les capteurs magnétostatiques 22 des barrières 20 en appliquant un coefficient de correction aux signaux qui dépend de la valeur de ces signaux. Plus précisément, l'objectif de la correction est d'atténuer le signal lorsque l'objet cible est plus proche d'une des barrières 20, où la sensibilité est plus forte, afin de réduire son poids dans la détection.

Pour cela, pour chaque couple de capteurs magnétostatiques 22, l'unité centrale 2 détermine la valeur maximale et la valeur minimale parmi les signaux générés par le premier capteur magnétostatique 22 et le deuxième capteur magnétostatique 22 à un instant donné. L'unité centrale 2 calcule ensuite un rapport entre la valeur maximale et la valeur minimale ainsi déterminées et le compare à des seuils déterminés pour ensuite en déduire la valeur du coefficient d'atténuation à appliquer à la valeur des signaux.

Par exemple, l'unité centrale 2 peut notamment comparer le rapport à un premier seuil et à un deuxième seuil, le deuxième seuil étant supérieur au premier seuil, et en déduire le coefficient d'atténuation. Ainsi, le coefficient d'atténuation peut être égal à :

- une première valeur lorsque le rapport est inférieur au premier seuil,
- une deuxième valeur inférieure à la première valeur lorsque le rapport est supérieur au deuxième seuil et
- une valeur comprise entre la première valeur et la deuxième valeur lorsque le rapport est compris entre le premier seuil et le deuxième seuil. En particulier, le coefficient d'atténuation peut être une fonction linéaire dépendant du rapport lorsque ledit rapport est compris entre le premier seuil et le deuxième seuil.

L'utilisation du rapport entre la valeur maximale et la valeur minimale permet de déterminer si l'objet cible qui génère un champ magnétique statique ou perturbe le champ électromagnétique terrestre est placé près de l'une des barrières 20. Dans ce cas, la valeur du rapport est supérieure au deuxième seuil et le coefficient d'atténuation qui est appliqué est égal à la deuxième valeur, qui est inférieure à la première valeur. Au contraire, lorsque l'objet cible est centré entre les deux systèmes de détection passifs 20, la sensibilité du traverse horizontale 20 dans cette zone est plus faible. Cela se traduit par un rapport entre la valeur maximale et la valeur minimale également plus faible. Le coefficient d'atténuation peut donc être plus élevé et l'atténuation résultante plus faible. On obtient ainsi une relative uniformité virtuelle entre les deux barrières 20. A titre d'exemple non limitatif, le premier seuil peut être égal à 30, le deuxième seuil peut être égal à 60, la première valeur peut être égale à 1, la deuxième valeur peut être égale à 0,1 et le coefficient d'atténuation peut être défini par la fonction suivante lorsque le rapport est compris entre le premier seuil et le deuxième seuil :

$$0,03*R + 1,9$$

où R est la valeur du rapport.

En d'autres termes, le coefficient d'atténuation peut être égal à 1 lorsque le rapport est inférieur à 30, 0,1 lorsque le rapport est supérieur à 60, et 0,03*R + 1,9 lorsque le rapport est compris entre 30 et 60.

Une fois la valeur des signaux corrigés, l'unité centrale 2 calcule, à partir de la valeur corrigée des signaux, une moyenne desdites valeurs corrigées pour chaque couple de capteurs magnétostatiques 22. C'est alors la valeur de cette somme corrigée qui est comparée à la deuxième valeur seuil prédéterminée.

De manière alternative, au lieu de calculer la valeur moyenne des signaux corrigés, l'unité centrale 2 peut calculer la somme des valeurs corrigées des signaux, ou encore leur valeur maximale, et comparer cette valeur (somme ou maximum) à la deuxième valeur seuil prédéterminée.

Bien entendu, on comprendra que, dans le deuxième mode de réalisation, l'unité centrale 2 peut d'abord calculer la valeur moyenne (respectivement, la somme ou la valeur maximale) des signaux puis appliquer à cette valeur moyenne (respectivement à cette somme ou à cette valeur maximale) l'étape de correction.

Le cas échéant, l'unité centrale 2 peut en outre corréler dans le temps et/ou dans l'espace le signal représentatif d'une perturbation du champ magnétique alternatif et le signal indicatif d'une intensité d'un champ magnétique statique.

En effet, lorsque le portique 10 comprend plusieurs bobinages émetteurs 14 et récepteurs 15 formant plusieurs canaux et que la barrière 20 comprend plusieurs capteurs magnétostatiques 22, chaque canal de bobinages 14, 15 et chaque capteur magnétostatique 22 ou couple de capteurs magnétostatiques 22 présente un pic de sensibilité lorsque l'objet cible qui est détecté se situe dans une zone de l'espace associée et prédéfinie. A partir des signaux générés par les différents bobinages 14, 15 et capteurs magnétostatiques 22, l'unité centrale 2 peut donc déterminer la zone de l'espace dans laquelle se trouve approximativement l'objet cible qui a été détecté par les capteurs magnétostatiques 22 et/ou les bobinages 14, 15. La corrélation dans l'espace des signaux permet ainsi à l'unité centrale 2 de déterminer si les signaux envoyés par les bobinages 14, 15 et les signaux générés par les capteurs magnétostatiques 22 sont liés à un objet cible situé spatialement dans la même zone du portique 10 ou s'ils sont liés à des objets cibles distincts situés dans des zones distinctes du portique 10.

Cette corrélation dans l'espace des signaux peut également être prise en compte dans l'envoi des instructions de génération d'alarme. Par exemple, le détecteur combiné 1 peut comprendre plusieurs émetteurs 5, 6 optiques sur chaque montant vertical 12 répartis entre leur partie supérieure et leur partie inférieure. En déterminant la zone de l'espace dans laquelle l'objet cible a été détecté, cette zone pouvant le cas échéant être confirmée par corrélation spatiale, l'unité centrale 2 peut envoyer des instructions de génération d'une alarme uniquement aux émetteurs situés à proximité de cette zone, par exemple les émetteurs situés à proximité du sol de l'un des montants verticaux 12.

De même, l'unité centrale 2 peut corréler dans le temps les signaux reçus des capteurs magnétostatiques 22 et des bobinages 14, 15 afin de déterminer si les détections sont sensiblement simultanées, auquel cas un même objet cible peut avoir été détecté, ou successives, auquel cas le portique 10 et les barrières 20 ont probablement détecté des objets distincts.

Par exemple, comme illustré sur la figure 8, lorsque, dans une même zone spatiale du portique et dans un même intervalle de temps, l'unité centrale 2 peut déterminer, à partir de l'intensité des signaux qui lui sont envoyé et de leur corrélation spatiale et temporelle, si l'objet détecté appartient à l'une des catégories suivantes : un téléphone miniaturisé, une arme ou un téléphone conventionnel. Le cas échéant, un émetteur spécifique peut être associé à chaque catégorie d'objet détecté afin que le détecteur combiné fournisse automatiquement à l'opérateur une information sur le type d'objet détecté.

Par exemple, lorsque, dans une même zone spatiale du portique et dans un même intervalle de temps le ou les capteurs magnétostatiques génèrent un signal S1 indicatif d'une intensité élevée d'un champ magnétique statique, mais que le signal S2 représentatif de la perturbation du champ magnétique alternatif est faible ou très faible (voir figure 5), l'unité centrale 2 en déduit que l'objet détecté comprend peu de métal et un élément magnétisé. L'unité centrale 2 détermine donc que l'objet détecté entre dans la catégorie des téléphones miniaturisés et envoie des instructions de génération d'alarme à l'émetteur dédié de cette catégorie d'objet.

Dans un autre exemple, lorsque, dans une même zone spatiale du portique et dans un même intervalle de temps le ou les capteurs magnétostatiques génèrent un signal S1 indicatif d'une intensité faible ou très faible d'un champ magnétique statique, mais que le signal S2 représentatif de la perturbation du champ magnétique alternatif est élevé (voir figure 6), l'unité centrale 2 en déduit que l'objet détecté comprend du métal et peu ou pas d'élément magnétisé. L'unité centrale 2 détermine donc que l'objet détecté entre dans la catégorie des armes et envoie des instructions de génération d'alarme à l'émetteur dédié de cette catégorie d'objet.

Dans un autre exemple encore, lorsque, dans une même zone spatiale du portique et dans un même intervalle de temps le ou les capteurs magnétostatiques génèrent un signal S1 indicatif d'une intensité élevée ou modérée d'un champ magnétique statique et que le signal S2 représentatif de la perturbation du champ magnétique alternatif est également élevé (voir figure 7), l'unité centrale 2 en déduit que l'objet détecté comprend du métal et un élément magnétisé. L'unité centrale 2 détermine donc que l'objet détecté entre dans la catégorie des téléphones conventionnels et envoie des instructions de génération d'alarme à l'émetteur dédié de cette catégorie d'objet.

Optionnellement, le passage de la personne à inspecter est en outre détecté par les cellules photoélectriques 8a et les réflecteurs 8b, qui envoient des informations de position de la personne à l'unité de contrôle. Ces informations de position peuvent alors également être corrélées dans le temps et/ou dans l'espace au signal représentatif d'une perturbation du champ magnétique alternatif et au signal indicatif d'une intensité d'un champ magnétique statique.

En particulier, les cellules photoélectriques 8a peuvent être synchronisées avec la génération d'alarmes lors d'une détection d'un objet cible par le portique 10 et/ou la ou les barrières 20. En effet, selon l'orientation et la taille de l'objet cible, la distance entre l'objet cible et les bobinages 14, 15 correspondant au pic du signal généré par le portique 10 peut être différent de la distance entre cet objet cible et les capteurs magnétostatiques 22 correspondant au pic du signal généré par la ou les barrières 20. De même, selon la configuration du détecteur combiné, la position spatiale de ces bobinages 14, 15 et de ces capteurs magnétostatiques 22 peut également être différente. Par conséquent, la détection du transit de la personne inspectée à l'aide des cellules photoélectriques 8a et des réflecteurs 8b peut être utilisée par l'unité centrale 30 afin de ne comparer les signaux générés par ces bobinages 14, 15 et ces capteurs magnétostatiques 22 à la valeur seuil prédéterminée correspondante que lorsque la personne inspectée sort du canal de transit, c'est-à-dire lorsque la personne inspectée est coupe le faisceau du couple de cellule photoélectrique 8a et de réflecteur 8b situé le plus en aval du portique 10. De la sorte, le traitement des signaux par l'unité centrale (30) est facilité et plus précis.

**Revendications**

1. Détecteur combiné (1) comprenant :

    - un système de détection actif (10) de métal comprenant :

        ▪ au moins deux montants verticaux (12) définissant entre eux un canal de transit et
        ▪ des bobinages (14, 15) répartis dans les deux montants verticaux (12) configurés pour émettre un champ magnétique alternatif et adaptés pour générer un signal représentatif d'une perturbation du champ magnétique induite lors d'un passage d'un individu entre les deux montants verticaux (12), le détecteur étant **caractérisé en ce qu'**il comprend:

    - au moins un système de détection passif (20) de métal comprenant au moins un capteur magnétostatique (22) configuré pour générer un signal indicatif d'une intensité d'un champ magnétique statique, le système de détection passif (20) étant logé dans l'un des montants verticaux (12), et
    - au moins un blindage (24) conducteur associé à l'au moins un capteur magnétostatique (22) et configuré pour court-circuiter des courants de surface.

2. Détecteur combiné (1) selon la revendication 1, dans lequel chaque capteur magnétostatique (22) est entouré par un blindage (24) conducteur.

3. Détecteur combiné (1) selon l'une des revendications 1 et 2, dans lequel le blindage (24) conducteur comprend un manchon cylindrique réalisé dans un matériau métallique amagnétique tel que de l'aluminium, du cuivre et/ou du laiton.

4. Détecteur selon l'une des revendications 1 à 3, dans lequel chaque capteur magnétostatique (22) présente une hauteur (h) déterminée, et une hauteur (H) du blindage (24) conducteur est supérieure à la hauteur (h) déterminée du capteur magnétostatique (22) associé, de préférence une hauteur (H) au moins égale à 1,5 fois la hauteur (h) déterminée du capteur magnétostatique (22) associé.

5. Détecteur combiné (1) selon la revendication 4, dans lequel l'au moins un capteur magnétostatique (22) est centré en hauteur par rapport au blindage (24) conducteur associé.

6. Détecteur combiné (1) selon l'une des revendications 1 à 5 dans lequel le système de détection passif (20) comprend :

    - au moins deux capteurs magnétostatiques (22) répartis sur une hauteur du système de détection passif (20), chaque capteur magnétostatique (22) étant entouré par un blindage (24) conducteur, et
    - un manchon de séparation (26) réalisé dans un matériau électriquement isolant, ledit manchon de séparation (26) étant placé entre les deux blindages (24) conducteurs de sorte à séparer lesdits blindages (24) conducteurs.

7. Détecteur combiné (1) selon l'une des revendications 1 à 6, dans lequel le blindage (24) conducteur est connecté à un potentiel fixe, par exemple à la terre.

8. Détecteur combiné (1) selon la revendication 7, comprenant au moins deux capteurs magnétostatiques (22) par système de détection passif (20), les au moins deux capteurs magnétostatiques (22) de chaque système de détection passif (20) étant connectés au potentiel fixe suivant une configuration en étoile.

9. Détecteur combiné (1) selon l'une des revendications 1 à 8, comprenant en outre une unité centrale (30) de contrôle et de traitement, ladite unité centrale (30) étant connectée d'une part aux bobinages (14, 15) et d'autre part à l'au moins un capteur magnétostatique (22) et étant configurée pour recevoir et traiter à la fois le signal représentatif d'une perturbation du champ magnétique alternatif et le signal indicatif d'une intensité d'un champ magnétique statique.

10. Détecteur combiné (1) selon la revendication 9, dans lequel l'unité centrale (30) est en outre configurée pour corréler dans le temps et/ou dans l'espace le signal représentatif d'une perturbation du champ magnétique alternatif et le signal indicatif d'une intensité d'un champ magnétique statique.

11. Détecteur combiné (1) selon l'une des revendications 8 ou 9, comprenant en outre un émetteur (5, 6, 7), l'unité centrale (30) étant configurée pour envoyer des instructions de génération d'une alarme à l'émetteur (5, 6, 7) lorsque le signal représentatif d'une perturbation du champ magnétique alternatif est supérieur à une première valeur seuil prédéterminée et/ou lorsque le signal indicatif d'une intensité d'un champ magnétique statique est supérieur à une deuxième valeur seuil prédéterminée.

12. Détecteur combiné (1) selon l'une des revendications 9 à 11, comprenant au moins deux systèmes de détection passifs (20) comprenant chacun au moins un capteur magnétostatique (22), les capteurs magnétostatiques (22) de chaque système de détection passifs (20) étant positionnés deux à deux à une même hauteur par rapport au sol de sorte à former des couples de capteurs en regard,

    chaque système de détection passif (20) étant logé dans un montant vertical (12) associé et étant connecté à l'unité centrale (30), ladite unité centrale (30) étant configurée pour calculer une valeur à partir des signaux générés par les capteurs magnétostatiques (22) des deux systèmes de détection passifs (20), ladite valeur calculée comprenant l'une des valeurs suivantes : une valeur moyenne pour chaque couple de capteurs magnétostatiques (22) des signaux générés par les capteurs magnétostatiques (22) ; une moyenne, une somme ou une valeur maximale des valeurs corrigées des signaux générés par les capteurs magnétostatiques (22) par application à chaque couple de capteur d'un coefficient d'atténuation auxdits signaux ; une somme des valeurs des signaux générés par chaque couple de capteurs magnétostatiques (22) ; une valeur maximale parmi les valeurs des signaux générés par chaque couple de capteurs magnétostatiques (22).

**Patentansprüche**

1. Kombinierter Detektor (1), umfassend:

    - ein aktives Metalldetektionssystem (10), umfassend:

        ▪ mindestens zwei vertikale Säulen (12), die zwischen sich einen Durchgangskanal definieren, und
        ▪ Spulen (14, 15), die in den beiden vertikalen Säulen (12) verteilt und dazu konfiguriert sind, ein magnetisches Wechselfeld zu emittieren, und geeignet sind, ein Signal zu erzeugen, das eine Störung des magnetischen Felds darstellt, die während eines Durchgangs einer Person zwischen den beiden vertikalen Säulen (12) induziert wird, wobei der Detektor **dadurch gekennzeichnet ist, dass** er Folgendes umfasst:

    - mindestens ein passives Metalldetektionssystem (20), das mindestens einen magnetostatischen Sensor (22) umfasst, der dazu konfiguriert ist, ein Signal zu erzeugen, das eine Intensität eines statischen magnetischen Felds darstellt, wobei das passive Detektionssystem (20) in einer der vertikalen Säulen (12) untergebracht ist, und

- mindestens eine leitfähige Abschirmung (24), die dem mindestens einen magnetostatischen Sensor (22) zugeordnet und dazu konfiguriert ist, Oberflächenströme kurzzuschließen.

2. Kombinierter Detektor (1) nach Anspruch 1, wobei jeder magnetostatische Sensor (22) von einer leitfähigen Abschirmung (24) umgeben ist.

3. Kombinierter Detektor (1) nach einem der Ansprüche 1 und 2, wobei die leitfähige Abschirmung (24) eine zylindrische Hülse umfasst, die aus einem nichtmagnetischen metallischen Material wie Aluminium, Kupfer und/oder Messing hergestellt ist.

4. Detektor nach einem der Ansprüche 1 bis 3, wobei jeder magnetostatische Sensor (22) eine bestimmte Höhe (h) aufweist und eine Höhe (H) der leitfähigen Abschirmung (24) größer ist als die bestimmte Höhe (h) des zugeordneten magnetostatischen Sensors (22), vorzugsweise eine Höhe (*H*), die mindestens dem 1,5-Fachen der bestimmten Höhe (h) des zugeordneten magnetostatischen Sensors (22) entspricht.

5. Kombinierter Detektor (1) nach Anspruch 4, wobei der mindestens eine magnetostatische Sensor (22) in der Höhe relativ zu der zugeordneten leitfähigen Abschirmung (24) zentriert ist.

6. Kombinierter Detektor (1) nach einem der Ansprüche 1 bis 5, wobei das passive Detektionssystem (20) Folgendes umfasst:

     - mindestens zwei magnetostatische Sensoren (22), die über eine Höhe des passiven Detektionssystems (20) verteilt sind, wobei jeder magnetostatische Sensor (22) von einer leitfähigen Abschirmung (24) umgeben ist, und
     - eine Trennhülse (26), die aus einem elektrisch isolierenden Material hergestellt ist, wobei die Trennhülse (26) zwischen den beiden leitfähigen Abschirmungen (24) angeordnet ist, um die leitfähigen Abschirmungen (24) zu trennen.

7. Kombinierter Detektor (1) nach einem der Ansprüche 1 bis 6, wobei die leitfähige Abschirmung (24) mit einem festen Potential, z. B. mit Masse, verbunden ist.

8. Kombinierter Detektor (1) nach Anspruch 7, umfassend mindestens zwei magnetostatische Sensoren (22) pro passivem Detektionssystem (20), wobei die mindestens zwei magnetostatischen Sensoren (22) jedes passiven Detektionssystems (20) mit dem festen Potential gemäß einer Sternkonfiguration verbunden sind.

9. Kombinierter Detektor (1) nach einem der Ansprüche 1 bis 8, ferner umfassend eine Zentralsteuer- und -verarbeitungseinheit (30), wobei die Zentraleinheit (30) einerseits mit den Spulen (14, 15) und andererseits mit dem mindestens einen magnetostatischen Sensor (22) verbunden und dazu konfiguriert ist, sowohl das Signal, das eine Störung des magnetischen Wechselfelds darstellt, als auch das Signal, das eine Intensität eines statischen magnetischen Felds darstellt, zu empfangen und zu verarbeiten.

10. Kombinierter Detektor (1) nach Anspruch 9, wobei die Zentraleinheit (30) ferner dazu konfiguriert ist, das Signal, das eine Störung des magnetischen Wechselfelds darstellt, und das Signal, das eine Intensität eines statischen magnetischen Felds darstellt, zeitlich und/oder räumlich zu korrelieren.

11. Kombinierter Detektor (1) nach einem der Ansprüche 8 oder 9, ferner umfassend einen Sender (5, 6, 7), wobei die Zentraleinheit (30) dazu konfiguriert ist, Anweisungen zum Erzeugen eines Alarms an den Sender (5, 6, 7) zu senden, wenn das Signal, das eine Störung des magnetischen Wechselfelds darstellt, größer als ein erster vorbestimmter Schwellenwert ist und/oder wenn das Signal, das eine Intensität eines statischen magnetischen Felds darstellt, größer als ein zweiter vorbestimmter Schwellenwert ist.

12. Kombinierter Detektor (1) nach einem der Ansprüche 9 bis 11, umfassend mindestens zwei passive Detektionssysteme (20), die jeweils mindestens einen magnetostatischen Sensor (22) umfassen, wobei die magnetostatischen Sensoren (22) jedes passiven Detektionssystems (20) zu zweit auf gleicher Höhe über dem Boden positioniert sind, um paarweise gegenüberliegende Sensoren zu bilden,

     wobei jedes passive Detektionssystem (20) in einer zugeordneten vertikalen Säulen (12) untergebracht und mit der Zentraleinheit (30) verbunden ist,
     wobei die Zentraleinheit (30) dazu konfiguriert ist, einen Wert zu berechnen, der von den Signalen stammt, die von den magnetostatischen Sensoren (22) der beiden passiven Detektionssysteme (20) erzeugt werden, wobei der berechnete Wert einen der folgenden Werte umfasst: einen Durchschnittswert für jedes Paar von magnetostatischen Sensoren (22) der Signale, die von den magnetostatischen Sensoren (22) erzeugt werden; einen Durchschnitt, eine Summe oder ein Maximalwert der korrigierten Werte der Signale, die von den magnetostatischen Sensoren (22) erzeugt werden, durch Anwenden eines Dämpfungskoeffizienten auf die Signale bei jedem Sensorpaar; eine Summe der Werte der Signale, die von jedem Paar von magnetostatischen Sensoren (22) erzeugt werden; ein Maximalwert unter den Signalwerten, die von jedem Paar von magnetostatischen Sensoren (22) erzeugt werden.

**Claims**

1. Combined detector (1) comprising:

   - an active metal detection system (10) comprising:

     ▪ at least two vertical posts (12) defining a transit channel between them and
     ▪ coils (14, 15) distributed in the two vertical uprights (12) configured to emit an alternating magnetic field and adapted to generate a signal representative of a disturbance of the magnetic field induced when an individual passes between the two vertical uprights (12), the detector being **characterised in that** it comprises :

   - at least one passive metal detection system (20) comprising at least one magnetostatic sensor (22) configured to generate a signal indicative of a static magnetic field strength, the passive detection system (20) being housed in one of the vertical posts (12), and
   - at least one conductive shield (24) associated with the at least one magnetostatic sensor (22) and configured to short-circuit surface currents.

2. A combination sensor (1) as claimed in 1, wherein each magnetostatic sensor (22) is surrounded by a conductive shield (24).

3. A combination detector (1) according to any of claims 1 and 2, wherein the conductive shield (24) comprises a cylindrical sleeve made of a non-magnetic metallic material such as aluminium, copper and/or brass.

4. A detector according to any of the claims 1 to 3, wherein each magnetostatic sensor (22) has a determined height (h), and a height (H) of the conductive shield (24) is greater than the determined height (h) of the associated magnetostatic sensor (22), preferably a height (H) at least equal to 1.5 times the determined height (h) of the associated magnetostatic sensor (22).

5. A combination detector (1) according to claim 4, wherein the at least one magnetostatic sensor (22) is centred in height relative to the associated conductive shield (24).

6. A combination detector (1) according to any of claims 1 to 5 wherein the passive detection system (20) comprises:

   - at least two magnetostatic sensors (22) distributed over a height of the passive detection system (20), each magnetostatic sensor (22) being surrounded by a conductive shield (24), and
   - a separation sleeve (26) made of an electrically insulating material, said separation sleeve (26) being placed between the two conductive shields (24) so as to separate said conductive shields (24).

7. A combination detector (1) according to any of the claims 1 to 6, wherein the conductive shield (24) is connected to a fixed potential, for example earth.

8. A combination detector (1) according to claim 7, comprising at least two magnetostatic sensors (22) per passive detection system (20), the at least two magnetostatic sensors (22) of each passive detection system (20) being connected to fixed potential in a star configuration.

9. Combined detector (1) according to one of claims 1 to 8, further comprising a central control and processing unit (30), said central unit (30) being connected on the one hand to the windings (14, 15) and on the other hand to the at least one magnetostatic sensor (22) and being configured to receive and process both the signal representative of a disturbance of the alternating magnetic field and the signal indicative of a static magnetic field strength.

10. The combined detector (1) of claim 9, wherein the central unit (30) is further configured to correlate in time and/or space the signal representative of a disturbance of the alternating magnetic field and the signal indicative of a static magnetic field strength.

11. A combined detector (1) according to one of claims 8 or 9, further comprising a transmitter (5, 6, 7), the central unit (30) being configured to send instructions for generating an alarm to the transmitter (5, 6, 7) when the signal representative of a disturbance of the alternating magnetic field is greater than a first predetermined threshold value and/or when the signal indicative of a static magnetic field strength is greater than a second predetermined threshold value.

12. Combined detector (1) according to one of the claims 9 to 11, comprising at least two passive detection systems (20) each comprising at least one magnetostatic sensor (22), the magnetostatic sensors (22) of each passive detection system (20) being positioned two by two at the same height with respect to the ground so as to form pairs of facing sensors,

each passive detection system (20) being housed in an associated vertical post (12) and being connected to the central unit (30), said central unit (30) being configured to calculate a value from the signals generated by the magnetostatic sensors (22) of the two passive detection systems (20), said calculated value comprising one of the following values: an average value for each pair of magnetostatic sensors (22) of the signals generated by the magnetostatic sensors (22); an average, a sum or a maximum value of the corrected values of the signals generated by the magnetostatic sensors (22) by applying to each pair of sensors an attenuation coefficient to said signals; a sum of the values of the signals generated by each pair of magnetostatic sensors (22); and a maximum value of the values of the signals generated by each pair of magnetostatic sensors (22).

# FIG. 1

# FIG. 2

# FIG. 3

# FIG. 4

## FIG. 5

## FIG. 6

**FIG. 7**

# FIG. 8

```
┌─────────────────────────┐
│    Réception d'un signal │
│     issu des capteurs    │
│   magnétostatiques et d'un│
│   signal issu des bobinages│
└─────────────────────────┘
```

Signal issu des capteurs magnétostatiques élevé

**NON**

Signal issu des bobinages élevé

**OUI**

**OUI**

Signal issu des bobinages élevé

**NON**

**OUI**

```
┌─────────────────────────┐
│    Envoi d'instruction   │
│ de génération d'une alarme│
│ à l'émetteur de la catégorie│
│ « Téléphone conventionnel »│
└─────────────────────────┘
```

```
┌─────────────────────────┐
│    Envoi d'instruction   │
│ de génération d'une alarme│
│ à l'émetteur de la catégorie│
│        « Arme »          │
└─────────────────────────┘
```

```
┌─────────────────────────┐
│    Envoi d'instruction   │
│ de génération d'une alarme│
│ À l'émetteur de la catégorie│
│ « Téléphone miniaturisé »│
└─────────────────────────┘
```

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 1750149 A
- FR 1855900
- FR 1855903
- FR 1855907

### Littérature non-brevet citée dans la description

- WI CODE : 11443 PRODUCT DATA SHEET WG Portable Walk-By mobile. Westminster International Ltd
- Design of an electromagnetic imaging system for weapon détection based on GMR sensor arrays. **DE GUI YUN TIAN.** SENSORS AND ACTUATORS A: PHYSICAL. ELSEVIER BV